Europäisches Patentamt

European Patent Office

Office européen des brevets

(11) Veröffentlichungsnummer: **0 347 683**
**A2**

# EUROPÄISCHE PATENTANMELDUNG

(21) Anmeldenummer: **89110534.8**

(22) Anmeldetag: **10.06.89**

(51) Int. Cl.⁴: **C08J 7/06**

(30) Priorität: **23.06.88 DE 3821131**

(43) Veröffentlichungstag der Anmeldung:
**27.12.89 Patentblatt 89/52**

(84) Benannte Vertragsstaaten:
**DE FR GB IT**

(71) Anmelder: **BAYER AG**

**D-5090 Leverkusen 1 Bayerwerk(DE)**

(72) Erfinder: **Thurm, Siegfried, Dr.**
**Am Damm 5a**
**D-4005 Meerbusch(DE)**
Erfinder: **Holm, Reimer, Dr.**
**Am Katterbach 32**
**D-5060 Bergisch Gladbach 2(DE)**
Erfinder: **Leuschke, Christian, Ing.-grad.**
**Neckarstrasse 36**
**D-4047 Dormagen(DE)**
Erfinder: **Rathmann, Dietrich, Dr.**
**Alte Landstrasse 119**
**D-5090 Leverkusen 1(DE)**
Erfinder: **Schrader, Lutz, Dr.**
**Krakauer Strasse 86**
**D-4105 Krefeld(DE)**

(54) **Verfahren zur Herstellung von Kunststofformkörpern mit verbesserter Witterungsbeständigkeit.**

(57) Gegenstand der vorliegenden Erfindung ist ein Verfahren zum Beschichten von Kunststofformkörpern aus thermoplastischen Polycarbonaten oder aus thermoplastischen Polyarylensulfiden mit Metalloxiden, die nach dem erfindungsgemäßen Verfahren erhältlichen Kunststoff-Formkörper sowie deren technische Verwendung im Außenbereich, also beispielsweise zur Herstellung von Abdeckungen im Bausektor.

EP 0 347 683 A2

## Verfahren zur Herstellung von Kunststofformkörpern mit verbesserter Witterungsbeständigkeit

Gegenstand der vorliegenden Erfindung ist ein Verfahren zum Beschichten von Kunststofformkörpern aus thermoplastischen Polycarbonaten oder aus thermoplastischen Polyarylensulfiden, das dadurch gekennzeichnet ist, daß die Kunststoffkörper mit Metalloxiden beschichtet werden, die elektromagnetische Strahlung einer Wellenlänge von 250 nm bis 400 nm und insbesondere von 270 nm bis 400 nm, absorbieren.

Ein weiterer Gegenstand der vorliegenden Erfindung sind die nach dem erfindungsgemäßen Verfahren erhältlichen Kunststofformkörper.

Die nach dem erfindungsgemäßen Verfahren hergestellten Kunststofformkörper besitzen eine gute Beständigkeit gegen die Einflüsse der Außenatmosphäre, also gegen UV-Licht, Feuchtigkeit und Temperaturschwankungen, haben also eine gute Witterungsbeständigkeit.

Sie erhalten über einen langen Zeitraum ihre Kunststoffeigenschaften, beispielsweise in puncto Mechanik und Optik.

Anorganische Schutzschichten für Kunststoffe sind zwar bekannt (s. beispielsweise I. D. Torbin und Yu. F. Dominov, Soc. J. Opt. Technol., Vol. 41, No. 10, 1974, Seiten 492 - 499, insbesondere Seite 495, rechte Spalte, bis Seite 496, linke Spalte), aber die dort genannten anorganischen Verbindungen absorbieren nicht in dem beanspruchten Spektralbereich oder absorbieren auch bei Wellenlängen größer 400 nm, so daß keine Transparenz vorliegt. Diese Schichten dienen der Verbesserung der Kratzfestigkeit, der antistatischen und elektrischen Eigenschaften sowie der Reflexverminderung optischer Bauteile aus Kunststoffen.

Es ist auch bekannt, $TiO_2$-Beschichtungen, also solche die im erfindungsgemäßen Bereich absorbieren, in Kombination mit anderen Schichten anorganischer Verbindungen zu kombinieren, um eine Reflexverminderung optischer Bauteile aus Kunststoffen zu erhalten (siehe beispielsweise JA 57 194 902).

Aus der EP-A 0 113 555 sind neue Verpackungsmaterialien bekannt, die aus verschiedenen Kunststoffen bestehen, welche mit Metalloxiden beschichtet sind, damit sie das eingepackte Material gegen Sauerstoff, Wasserdampf und UV-Licht schützen. Als Kunststoffe werden weder Polycarbonate, noch Polyarylensulfide genannt, auch ist nicht Ziel der EP-A- 0 113 555 die Kunststoffe gegen Witterungseinflüsse zu schützen.

Gemäß APPLIED PHYSICS LETTERS, Band 39, Nr. 8, 15. Oktober 1981, Seiten 640-642, American Institute of Physics, New York, US; J.B. WEBB et al.; "Transparent and highly conductive films of ZnO prepared by rf reactive magnetron sputtering" wird ZnO auf Glas aufgebracht, um leitfähige transparente Schichten herzustellen.

Gemäß "THIN SOLID FILMS", Band 124, Nr. 1, Febuar 1985, Seiten 43-47, Elsevier Sequoia, Lausanne, CH; T. MINAMI et al.: "Highly conductive and transparent ZnO thin films prepared by R.F. magnetron sputtering in an applied external D.C. magnetic field" wird ZnO in Kombination mit $Al_2O_3$ auf Glas aufgebracht um wiederum leitfähige transparente Schichten herzustellen.

Gemäß US-Patent 4 048 372 wird Cadmiumstannat auf beschichtete Kunststoffsubstrate als äußere Schicht aufgebracht, welche bereits Metalloxide wie $TiO_2$ enthalten. Die Metalloxide dienen zur Verbesserung der Haftung von Cadmiumstannat. Die so beschichteten Kunststoffsubstrate dienen als lichtdurchlässige, elektrisch leitfähige Körper. Als Kunststoff ist auch Polycarbonat erwähnt.

Die Beschichtung dient somit in dem US-Patent der Lichtdurchlässigkeit, während gemäß vorliegender Erfindung die Beschichtung der Absorption von elektromagnetischer Strahlung dient.

In der US-Patentschrift 4 552 791 werden Kunststoffe mit verminderter Gasdurchlässigkeit hergestellt, wobei als Beschichtung verschiedene Metalloxide wie Si-Monoxid, Aluminiumoxid, Titanoxid oder Tantaloxid eingesetzt werden, nicht jedoch $TiO_2$. Die in US-PS genannten Oxide sind gemäß vorliegender Erfindung unwirksam.

Gemäß THIN SOLID FILMS, Band 127, Nr. 1/2, Mai 1985, Seiten 107-114, Elsevier Seqouia, Lausanne, CH; B. A. BANKS et al.: "Sputtered coatings for protection of spacecraft polymers" werden $Al_2O_3$ und $SiO_2$ mit einer kleineren Menge von Polytetrafluorethylen zur Beschichtung von Polyimidkunststoffen eingesetzt, um diese Kunststoffe gegen Oxydation bei der Raumfahrt zu schützen. Die verwendeten Oxide sind gemäß vorliegender Erfindung unwirksam.

Gemäß FR-A- 2 230 754 wird Glas mit Titanoxiden beschichtet, um ein Schichtmaterial mit definiertem Brechungsindex herzustellen.

Die zu schützenden, thermoplastischen Polycarbonate sind literaturbekannt und sollen vorzugsweise Gewichtsmittelmolekulargewichte $\overline{M}_w$ von etwa 10.000 bis 200.000, vorzugsweise von 20.000 bis 100.000 haben, wobei das $\overline{M}_w$ durch Gelchromotographie in bekannter Weise ermittelt wird.

Die thermoplastischen Polyarylensulfide sind ebenfalls literaturbekannt. (Siehe US-PS 3 354 129 und EP-OS 0 171 021 sowie die in EP-OS 0 171 021 angezogene Literatur).

Sie sollen Gewichtsmittelmolekulargewichte $\overline{M}_w$ von etwa 30.000 bis 50.000 haben, wobei $\overline{M}_w$ durch Hochtemperatur-Gelchromatographie in bekannter Weise ermittelt wird.

Geeignete Metalloxide, die im beanspruchten Wellenlängenbereich absorbieren, sind beispielsweise $TiO_2$, $SnO_2$ und ZnO.

Das Beschichten der Kunststofformkörper mit den Metalloxiden erfolgt in einer Vakuumaufdampfanlage, wobei der Kunststofformkörper an einem Substrathalter befestigt ist. Man arbeitet in einem Vakuum von etwa maximal $1 \times 10^{-5}$ mbar. Das Metalloxid wird mittels Elektronenstrahlkanone verdampft, wobei wichtig ist, daß zwischen der Elektronenstrahlkanone und dem befestigten Formkörper eine bewegliche Blende angebracht ist, die während der Aufheizphase des Metalloxids ein vorzeitiges Bedampfen des Kunststofformkörpers verhindert.

Die Verdampfung des Metalloxids erfolgt bei Temperaturen zwischen etwa 1500 K und 3000 K.

In vielen Fällen empfiehlt es sich, vor dem Aufdampfen des Schutzfilmes das Substrat einer Niederdruckplasmabehandlung in einer Gasatmosphäre, beispielsweise Argon oder $O_2$, bei einem Druck von ca. $5 \times 10^{-2}$ mbar zu unterziehen, um eventuell vorhandene Verunreinigungen von dem Substrat zu entfernen und dadurch die Haftung der Schutzschicht auf dem Substrat zu verbessern.

Das Metalloxid wird zunächst mit der Elektronenstrahlkanone mit einer Leistung von 4 - 6 kW aufgeheizt, um es auf eine Temperatur von ca. 1500 K bis 3000 K zu bringen. Danach wird die schwenkbare Blende zwischen Kunststofformkörper und Elektronenstrahlkanone entfernt und die Beschichtung des Kunststofformkörpers eingeleitet.

Die Dicke der Schutzschicht kann während des Aufdampfvorganges, beispielsweise mittels eines Schwingquarzschichtdickenmeßgerätes, kontrolliert werden. Außerdem kann die stöchiometrische Zusammensetzung der Schutzschicht durch Zugabe von Reaktivgasen, im Falle von $TiO_2$ von $O_2$, beeinflußt werden. Daher ist im folgenden immer, wenn von einer $TiO_2$-Schicht gesprochen wird, eine Schicht zu verstehen, in der das Verhältnis der Anzahl der Ti-Atome zu der Anzahl der Sauerstoff-Atome zwischen 0,5 und 1 liegt.

Entsprechendes gilt beim Aufbringen anderer Metalloxide sinngemäß.

Die Schichtdicken der Metalloxide liegen zwischen 40 und 2000 nm, vorzugsweise zwischen 50 und 1000 nm.

Nachdem auf dem Kunststofformkörper eine Metalloxidschicht genügender Dicke, beispielsweise eine $TiO_2$-Schicht von 440 nm, abgeschieden ist, wird die Schwenkblende wieder zwischen Substrathalter und Elektronen strahlkanone eingebracht, und die Elektronenstrahlkanone abgeschaltet. Zur Erzielung einer besseren Gleichmäßigkeit der Schichtdicke der Metalloxidschicht empfiehlt es sich, den Substrathalter beweglich, z. B. drehbar, auszubilden.

Die Metalloxidschicht kann in einer anderen Verfahrensweise auf die Kunststofformkörper dadurch aufgebracht werden, indem man das Metall allein oder ein Gemisch aus Metall und Metalloxid in einer Sauerstoffatmosphäre verdampft, wobei für die Verdampfung statt einer Elektronenstrahlkanone widerstandsbeheizte oder induktiv beheizte Verdampfer benutzt werden können.

Eine dritte Verfahrensweise zur Aufbringung der Metalloxidschicht ist das sogenannte Gleichspannungs- oder Hochfrequenz-Sputtern des Metalloxids, oder das reaktive Gleichspannungs- oder Hochfrequenz-Sputtern des entsprechenden Metalls. (Kathodenzerstäubungsverfahren).

Eine vierte Verfahrensweise zur Aufbringung der Metalloxidschicht ist das Ionenplattieren.

Eine fünfte Verfahrensweise zur Aufbringung der Metalloxidschicht auf den Kunststofformkörper bietet das sogenannte "plasmagestützte" Beschichtungsverfahren, wobei sich der Kunststofformkörper in einem Hochfrequenz- oder Mikrowellenplasma befindet, und das Metalloxid aus einer oxidativ abbaubaren Metallverbindung und Sauerstoff erzeugt wird.

Derartige, oxidativ abbaubare Metallverbindungen sind beispielsweise $Ti[O-CH_2CH(CH_3)_2]_4$, $Ti(O\text{-}iso\text{-}C_3H_7)_4$, $TiCl_4$, $Sn(CH_3)_4$ und $Zn(C_2H_5)_2$.

Geeignete Kunststofformkörper, die nach dem erfindungsgemäßen Verfahren beschichtet werden können, sind beispielsweise Platten, wie Massivplatten und Hohlkörperplatten, Folien, Fensterscheiben für Kraftfahrzeuge, Scheinwerferscheiben für Kraftfahrzeuge sowie Formkörper jeglicher Art und Dimension in der Außenanwendung, beispielsweise für Abdeckungen im Bausektor.

## Beispiel

Auf eine Polycarbonatplatte (100 mm x 200 mm x 3 mm) aus Bisphenol-A-Homopolycarbonat wird eine $TiO_2$-Schicht von 440 nm wie folgt aufgebracht: Der Formkörper wird in einer Aufdampfanlage der Fa. Leybold-Heraeus GmbH vom Typ A1100 an einem rotierbaren Substrathalter befestigt. Anschließend wird die Kammer der Aufdampfanlage geschlossen und auf ca. $1 \times 10^{-5}$ mbar evakuiert. Danach wird Ar bis zu einem Druck von $5 \times 10^{-2}$ mbar eingelassen und der Drehantrieb des Substrathalters eingeschaltet, so daß dieser mit 20 U/min rotiert. Anschließend wird durch Anlegen einer Spannung an eine als Kathode geschaltete Al-Platte eine Spannung von 600 V angelegt und ein Niederdruckplasma gezündet. In diesem Plasma wird der Formkörper 5 Minuten mit einer Leistung von 120 W behandelt. Danach wird die Spannung abgeschaltet, die Ar-Zugabe beendet und der Kessel erneut auf 1 x 10$^{-5}$ mbar evakuiert.

Nach Erreichen dieses Druckes wird die Elektronenstrahlkanone eingeschaltet und das zu verdampfende TiO$_2$ mit einer Leistung von 6 kW innerhalb von 2 Minuten auf ca. 2500 K erhitzt. Anschließend wird die bewegliche Blende zwischen Elektronenstrahlkanone und Substrathalter entfernt und der Formkörper für 440 Sekunden bei einer Aufdampfrate von 1 nm/sec beschichtet. Danach wird die bewegliche Blende wieder zwischen Elektronenstrahlkanone und Substrathalter eingebracht und der Beschichtungsvorgang beendet. Nach dem Abschalten der Elektronenstrahlkanone und Abkühlung des Verdampfgutes wird nach 15 Minuten die Kammer der Aufdampfanlage belüftet und der beschichtete Formkörper entnommen.

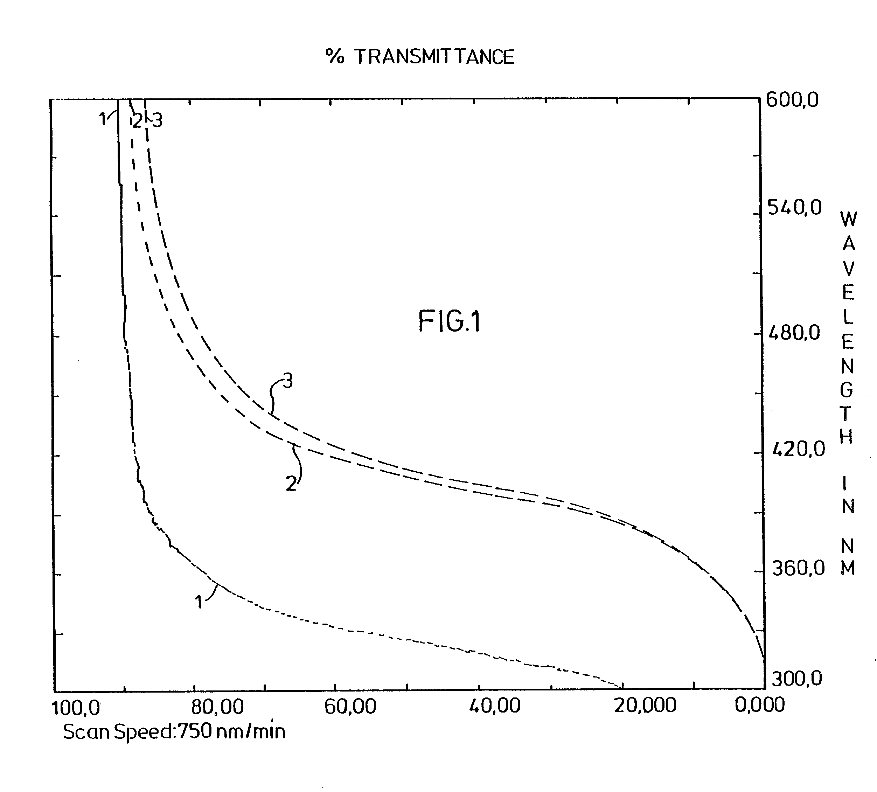

Der so beschichtete Polycarbonatformkörper wird mit einem entsprechenden unbeschichteten Formkörper in einem Weatherometer 306h und 680h bewittert. Dabei wird die Probe mit einer UV-Strahlungsquelle, die ein Intensitätsmaximum bei ca. 310 nm besitzt, bestrahlt und im Abstand von 20 Minuten bei einer Umgebungstemperatur von 35°C für ca. 3 Minuten mit 30°C kaltem Wasser besprüht. Nach 306h und 680h wurden beide Proben dem Weatherometer entnommen und die optische Transmission zwischen 300 und 600 nm gemessen. Figur 1 zeigt die Transmission des Polycarbonatformkörpers ohne Schutzschicht.

Dabei zeigt Kurve 1 die Transmission vor der Bewitterung, Kurve 2 die Transmission nach 306h Bewitterung und Kurve 3 nach 680h Bewitterung. Es zeigt sich deutlich eine starke Absorption im blauen Spektralbereich zwischen 380 und 420 nm nach 306h und 680h Bewitterung, welche eine Gelbfärbung des Kunststoffes bewirkt und durch die Reaktionsprodukte bedingt werden, die bei der Degradation des Polycarbonates entstehen.

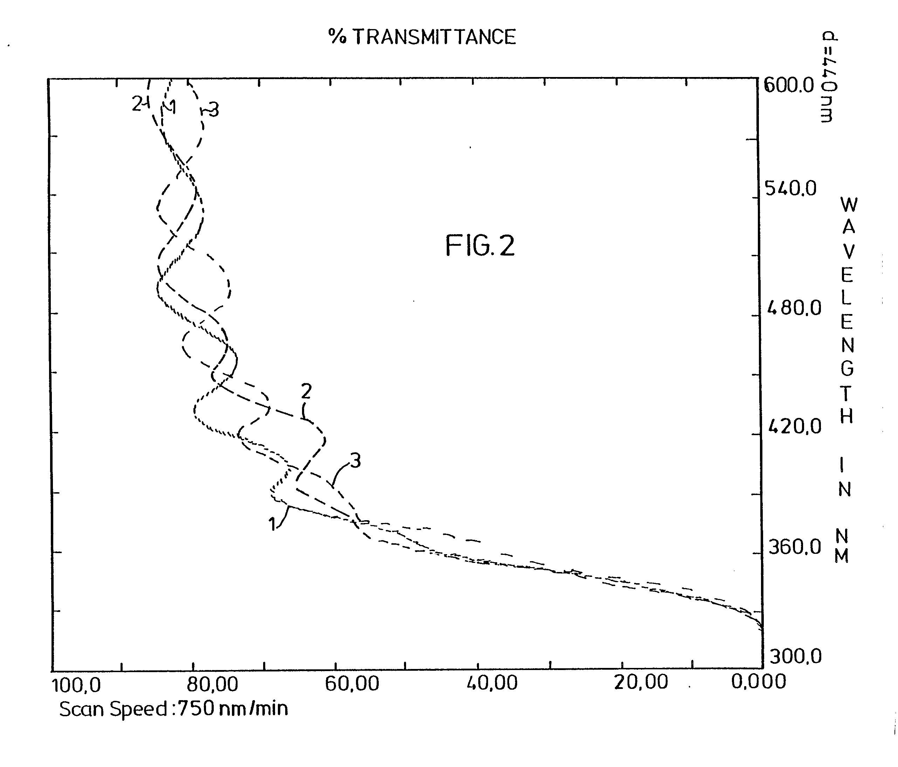

Figur 2 zeigt die Transmission des Polycarbonatformkörpers mit einer 440 nm dicken TiO$_2$-Schutzschicht.

Dabei zeigt Kurve 1 die Transmission der Probe vor der Bewitterung, Kurve 2 die Transmission nach 306h Bewitterung und Kurve 3 die Transmission nach 680h Bewitterung. Es zeigt sich deutlich, daß im Unterschied zu der Transmissionskurve des unbeschichteten Polycarbonatformkörpers in Abbildung 1 keine Verringerung der Transmission zwischen 380 und 420 nm festgestellt wird, d. h., es tritt keine für die Degradation des Polycarbonates charakteristische Gelbfärbung der Probe auf.

Die Messungen der Figuren 1 und 2 wurden mit einem Beckman DK-50 Spektralphotometer durchgeführt.

## Ansprüche

1. Verfahren zum Beschichten von Kunststofformkörpern aus thermoplastischen Polycarbonaten oder aus thermoplastischen Polyarylensulfiden, dadurch gekennzeichnet, daß die Kunststofformkörper mit Metalloxiden beschichtet werden, die elektromagnetische Strahlung einer Wellenlänge von 250 nm bis 400 nm absorbieren.

2. Verfahren gemäß Anspruch 1 dadurch gekennzeichnet, daß die Kunststofformkörper mit Metalloxiden beschichtet werden, die Strahlung von 270 nm bis 400 nm absorbieren.

3. Kunststofformkörper, erhältlich nach dem Verfahren der Ansprüche 1 und 2.

4. Verwendung der Kunststofformkörper des Anspruchs 3 zur Herstellung von Abdeckungen.

% TRANSMITTANCE

FIG.1

Scan Speed: 750 nm/min

WAVELENGTH IN NM

EP 0 347 683 A2

LeA 25992

FIG.2

LeA 25992